# FASCICULE DE BREVET EUROPEEN

(11) **EP 3 442 852 B1**
(45) Date de publication et mention de la délivrance du brevet: **29.01.2020**
(21) Numéro de dépôt: 17716581.8
(22) Date de dépôt: 24.03.2017
(51) Int. Cl.: B62D 25/16, B62D 27/06, B60R 19/24

(54) **AGENCEMENT D'UN BOUCLIER ET D'UN ÉLÉMENT DE CARROSSERIE D'UN VÉHICULE AUTOMOBILE, NOTAMMENT D'UN ÉLÉMENT DE CARROSSERIE EN TOLE**
ANORDNUNG EINER ABSCHIRMUNG UND EINES KAROSSERIEELEMENTS EINES KRAFTFAHRZEUGS, INSBESONDERE EINES KAROSSERIEELEMENTS AUS BLECH
ARRANGEMENT OF A SHIELD AND A BODY ELEMENT OF A MOTOR VEHICLE, IN PARTICULAR A BODY ELEMENT MADE FROM SHEET METAL

(30) Priorité: 12.04.2016 FR 1653194
(43) Date de publication de la demande: 20.02.2019
(73) Titulaire: Renault S.A.S., 92100 Boulogne-Billancourt (FR)
(72) Inventeur: GUERLIN, Philippe, 91540 Mennecy (FR); VERHAEGHE, Antoine, 78960 Voisins le Bretonneux (FR)
(86) Numéro de dépôt international: PCT/FR2017/050688
(87) Numéro de publication internationale: WO 2017/178724

(56) Documents cités:
- EP-A1- 2 695 775
- GB-A- 2 482 939
- JP-A- 2007 283 995

## Description

L'invention concerne un agencement d'un bouclier et d'un élément de carrosserie d'un véhicule automobile, notamment d'un élément de carrosserie en tôle. L'invention est plus particulièrement destinée à l'agencement d'un bouclier avant et d'une aile de carrosserie.

La liaison entre le bouclier et un élément de carrosserie adjacent d'un véhicule automobile peut être réalisée au moyen d'une pièce de fixation sur laquelle est clippé un bord du bouclier, lequel doit être positionné de manière adjacente à l'élément de carrosserie, avec un jeu le plus faible possible pour l'obtention d'une bonne finition.

Cet élément de carrosserie peut être un élément de référence de la carrosserie tel qu'un côté de caisse, encore appelé aile arrière du véhicule, contre lequel le bouclier arrière est plaqué ou tel qu'une aile avant contre laquelle le bouclier avant est plaqué.

La pièce de fixation, généralement réalisée en matériau polymère, est solidarisée à une partie cachée de l'élément de carrosserie, située derrière le bouclier, sensiblement parallèlement à celui-ci. Le clippage du bouclier sur la pièce de fixation est réalisé suivant une direction de fixation prédéterminée, le bord clippé du bouclier étant un bord situé le long de l'élément de carrosserie. La solidarisation de la pièce de fixation à l'élément de la carrosserie est réalisée suivant une direction perpendiculaire à une paroi sensiblement verticale du bouclier par des moyens de fixation de type rivet, vis ou tout autre moyen adapté. Le document EP 2 695 775 A1 décrit un agencement connu de bouclier et d'un élément de carrosserie d'un véhicule automobile.

Toutefois, cette pièce de fixation ne permet pas toujours d'assurer un jeu constant entre le bord clippé du bouclier et l'élément de carrosserie adjacent, en particulier suivant la direction de clippage du bouclier sur la pièce de fixation, ce qui rend difficile l'obtention d'une bonne qualité d'accostage et de finition de la liaison visible bouclier - élément de carrosserie. En particulier, un mauvais affleurement peut être observé, notamment lorsque l'élément de carrosserie est en tôle de faible épaisseur et le bouclier en matériau polymère, ce mauvais affleurement pouvant résulter de la déformation de l'élément de carrosserie. On peut alors observer un jeu irrégulier ou bien un décalage entre les pièces, ce qui n'est pas acceptable.

Il existe également des solutions dans lesquelles la pièce de fixation est fixée par vis ou rivet à l'élément de carrosserie, sur une partie de celui-ci qui s'étend sensiblement perpendiculairement à une paroi sensiblement verticale du bouclier et non derrière celle-ci. Une telle fixation permet de garantir un jeu constant entre le bouclier et l'élément de carrosserie mais nécessite la réalisation de perçages précis au travers de l'élément de carrosserie pour garantir le jeu et par conséquent l'utilisation d'un outillage coûteux. Le montage est de plus souvent réalisé à l'aveugle, la direction de fixation étant en général dans un plan vertical et la paroi de fixation de l'élément de carrosserie dirigée vers le sol. En outre, cette solution ne peut être retenue pour tout type de véhicule.

L'invention vise à pallier ces inconvénients en proposant un agencement d'un bouclier et d'un élément de carrosserie d'un véhicule automobile qui permette de maintenir un jeu sensiblement constant entre le bouclier et l'élément de carrosserie adjacent suivant la direction de clippage et d'assurer la position relative des deux éléments lors de l'utilisation du véhicule.

A cet effet, l'objet de l'invention concerne un agencement d'un bouclier et d'un élément de carrosserie d'un véhicule automobile, le bouclier comportant une paroi présentant une face externe visible et une face interne cachée, la paroi étant bordée par un rebord incliné vers la face interne, l'élément de carrosserie présentant successivement une première partie disposée dans le prolongement de la paroi du bouclier à un jeu prédéterminé de celle-ci, une deuxième partie s'étendant sensiblement parallèlement au rebord du bouclier, notamment à proximité immédiate de celui-ci, et une troisième partie s'étendant en regard de la face interne de la paroi du bouclier, le bouclier et l'élément de carrosserie étant fixés l'un à l'autre au moyen d'une pièce de fixation laquelle comprend :
- une partie de fixation dont une face est en appui contre la face interne de la paroi du bouclier et dont une face opposée est solidarisée à la troisième partie de l'élément de carrosserie, et
- un rebord longitudinal s'étendant sensiblement perpendiculairement aux faces de la partie de fixation, le long d'un bord longitudinal de celles-ci, et solidarisé au rebord du bouclier par encliquetage.

Selon l'invention, le rebord longitudinal de la pièce de fixation comprend un ou plusieurs doigts de maintien de même orientation, chaque doigt de maintien de forme générale en L présentant :
- un premier bras solidaire de la pièce de fixation et traversant des orifices correspondants du rebord du bouclier et de la deuxième partie de l'élément de carrosserie, et
- un deuxième bras s'étendant sensiblement parallèlement à la deuxième partie de l'élément de carrosserie, ce deuxième bras présentant une surface d'appui en contact contre une face de la deuxième partie de l'élément de carrosserie opposée à une face en regard du rebord du bouclier.

Le contact entre le deuxième bras du ou des doigts de maintien bloque tout déplacement de la deuxième partie de l'élément de carrosserie dans une direction opposée au rebord longitudinal du bouclier. Ainsi, la présence du ou des doigts de maintien permet de limiter, voire de supprimer, la déformation de l'élément de carrosserie à proximité immédiate du bouclier et son écartement du rebord du bouclier, assurant un jeu maximal constant entre l'élément de carrosserie et le bouclier et une bonne finition de l'agencement.

L'agencement selon l'invention nécessite la réalisation d'orifices au travers du bouclier et de l'élément de carrosserie, mais il n'est pas nécessaire que ces orifices soient réalisés de manière précise car ils ne servent pas à garantir un écartement constant via une fixation mais uniquement à laisser passer les doigts de maintien, de sorte qu'ils peuvent être réalisés de manière simple et peu couteuse. L'écartement maximal entre les pièces est garanti par le contact entre la surface d'appui du ou des doigts de maintien et l'élément de carrosserie.

En outre, la pièce de fixation est fixée sur une paroi de l'élément de carrosserie (troisième partie) qui s'étend généralement sensiblement perpendiculairement à l'axe transversal du véhicule, de sorte que l'opérateur y a facilement accès, ce qui facilite la fixation et l'obtention d'une bonne qualité de fixation.

L'agencement selon l'invention peut en outre présenter une ou plusieurs des caractéristiques suivantes :
- le deuxième bras dudit doigt de maintien s'étend en direction de la première partie de l'élément de fixation, sensiblement perpendiculairement à celle-ci. La surface d'appui du deuxième bras est ainsi disposée au plus près de la troisième partie de l'élément de fixation, favorisant son maintien par rapport au rebord du bouclier.
- Les dimensions de l'orifice de la deuxième partie de l'élément de carrosserie sont supérieures aux sections transversales maximales des premier et deuxième bras dudit doigt de maintien et inférieures aux dimensions du deuxième bras dans un plan défini par celui-ci. Ainsi, un doigt de maintien orienté vers la première partie de l'élément de carrosserie peut être inséré dans l'orifice par rotation, mais ne peut en être extrait par un mouvement de translation. Ceci permet un montage facile tout en assurant le maintien de l'élément de carrosserie.
- Le rebord longitudinal de la pièce de fixation comprend au moins deux doigts d'encliquetage coopérant avec des orifices correspondants du rebord du bouclier. De tels doigts assurent ainsi uniquement l'encliquetage du bouclier sur la pièce de fixation. Un doigt de maintien peut alors être prévu entre deux doigts d'encliquetage du bouclier sur la pièce de fixation, ou bien plusieurs doigts de maintien peuvent être disposés en alternance avec des doigts d'encliquetage le long du bord longitudinal de la pièce de fixation. Une telle alternance favorise un bon maintien de l'élément de carrosserie par rapport au bouclier.
- Le rebord du bouclier présente une ou plusieurs découpes sur un bord libre formant un ou plusieurs orifices pour le passage du ou des doigts de maintien. De telles découpes présentent l'avantage d'être réalisées de manière simple, sans fragiliser le rebord du bouclier.
- Le bouclier est en matériau polymère et l'élément de carrosserie est en tôle.

L'invention concerne plus particulièrement l'agencement d'un bouclier avant, optionnellement en matériau polymère, et d'un élément de carrosserie avant, tel qu'une aile, optionnellement en tôle.

L'invention concerne également un véhicule comprenant au moins un agencement selon l'invention.

L'invention est maintenant décrite en référence aux dessins annexés, non limitatifs, dans lesquels :
- la figure 1 est une représentation en perspective d'un agencement selon l'invention ;
- la figure 2 est une représentation en perspective partielle d'un élément de carrosserie faisant partie de l'agencement représenté figure 1 ;
- la figure 3 est une représentation en perspective d'une pièce de fixation faisant partie de l'agencement représenté figure 1 ;
- la figure 4 est une représentation en perspective partielle d'un bouclier faisant partie de l'agencement représenté figure 1 ;
- la figure 5 est une vue en coupe de l'agencement de la figure 1 ;
- la figure 6 montre le dessus du rebord du bouclier encliqueté sur la pièce de fixation de l'agencement représenté figure 1, l'élément de carrosserie étant omis.

Dans la présente description, les termes avant, arrière, supérieur, inférieur, font référence aux directions avant et arrière du véhicule, lorsque le bouclier et l'élément de carrosserie sont montés sur le véhicule. Par face visible, on entend une face visible de l'extérieur du véhicule, contrairement à une face cachée, invisible.

Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°°, voire d'au plus 10° ou d'au plus 5°, avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

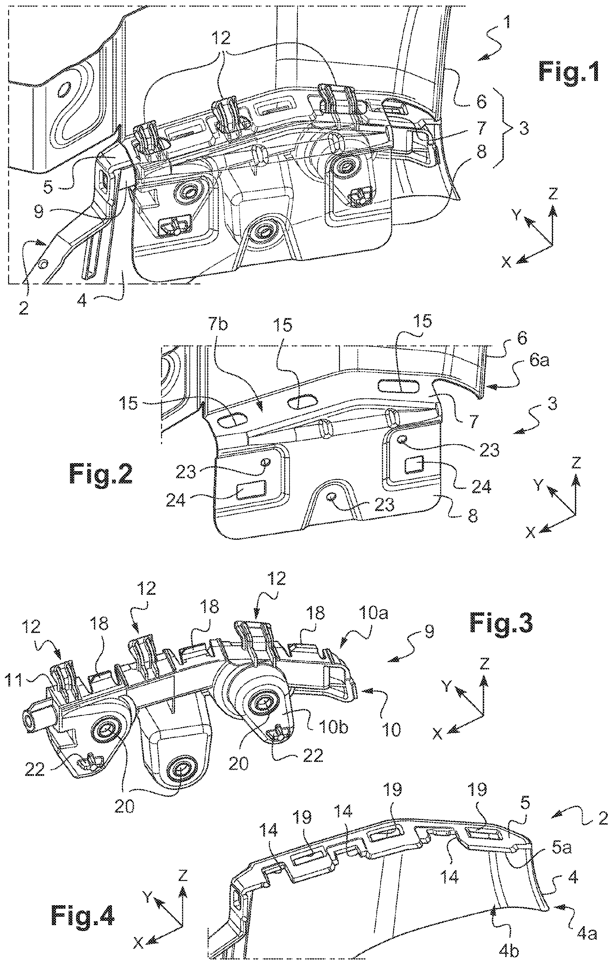

La figure 1 représente l'agencement 1 d'un bouclier 2 et d'un élément de carrosserie 3 d'un véhicule automobile. Dans l'exemple représenté, le bouclier 2 est un bouclier avant et l'élément de carrosserie 3 est une aile.

Le bouclier 2 comporte une paroi 4 présentant une face externe 4a visible et une face interne opposée 4b cachée. Cette paroi 4 est bordée par un rebord 5 incliné vers cette face interne 4b. Ici, le rebord 5 s'étend sensiblement perpendiculairement à la paroi 4 (fig.4).

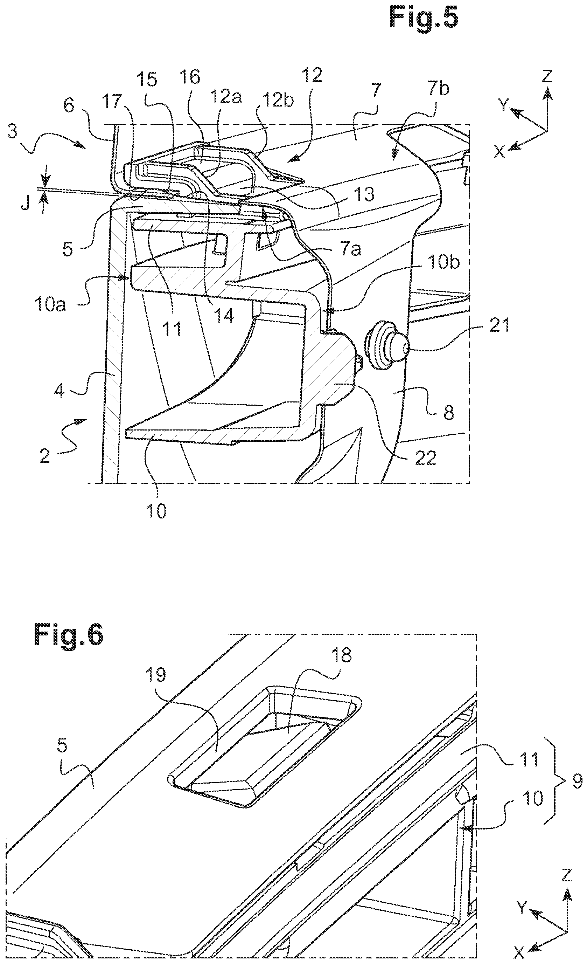

L'élément de carrosserie 3 présente successivement (fig.1, 2) :
- une première partie 6, dont une face externe 6a est visible, cette première partie 6 s'étendant dans le prolongement de la paroi 4 du bouclier à un jeu J prédéterminé de celle-ci (voir figure 5) ;
- une deuxième partie 7 s'étendant sensiblement parallèlement au rebord 5 du bouclier, notamment à proximité immédiate de celui-ci ;
- une troisième partie 8 s'étendant en regard de la face interne 4b de la paroi 4 du bouclier.

Le bouclier 2 est l'élément de carrosserie 3 sont fixés l'un à l'autre au moyen d'une pièce de fixation 9, parfois appelée presseur. Cette pièce de fixation 9 comprend (fig.1, 3):
- une partie de fixation 10 dons une face 10a est en appui contre la face interne 4b de la paroi 4 du bouclier et dont une face opposée 10b est solidarisée à la troisième partie 8 de l'élément de carrosserie (voir aussi figure 5);
- un rebord longitudinal 11 lequel s'étend sensiblement perpendiculairement aux faces 10a, 10b de la partie de fixation 10, le long d'un bord longitudinal de celles-ci, et solidarisé au rebord 5 du bouclier 2 par encliquetage.

Selon l'invention, le rebord longitudinal 11 de la pièce de fixation 9 comprend un doigt de maintien 12 ou plusieurs doigts de maintien 12 de même orientation. Par même orientation, on entend des doigts de maintien 12 qui s'étendent sensiblement dans une même direction. Dans le mode de réalisation représenté, trois doigts de maintien 12 sont prévus.

Tel que visible plus nettement sur la figure 5, chaque doigt de maintien 12 de forme générale en L présente :
- un premier bras 13 solidaire de la pièce de fixation 9, plus précisément de son rebord longitudinal 11, et traversant des orifices 14, 15 correspondants réalisés respectivement dans le rebord 5 du bouclier et la deuxième partie 8 de l'élément de carrosserie, et
- un deuxième bras 16 s'étendant sensiblement parallèlement à la deuxième partie 7 de l'élément de carrosserie, ce deuxième bras 16 présentant une surface d'appui 17 en contact contre une face 7b de la deuxième partie 7 de l'élément de carrosserie opposée à une face 7a en regard du rebord 5 du bouclier.

Du fait du contact entre la surface d'appui 17 et la face 7b de la deuxième partie 7 de l'élément de carrosserie, on comprend que tout déplacement de cette deuxième partie 7 de l'élément de carrosserie dans une direction opposée au rebord 5 du bouclier (suivant une direction sensiblement perpendiculaire à cette face 7b) est interdit. Ainsi, une déformation de l'élément de carrosserie 3 en tôle, notamment l'écartement de la deuxième partie 7 par rapport au bouclier 2, est limité, voire réduit.

On notera que les deuxièmes bras 16 des doigts de maintien 12 s'étendent en direction de la première partie 6 de l'élément de carrosserie 3. Ainsi, la surface d'appui 17 peut-être agencée au plus près de la jonction entre les première et deuxième parties 6, 7 de l'élément de carrosserie, autrement dit au plus près de la zone d'affleurement de la paroi 4 du bouclier 5 et de la première partie 6 de l'élément de carrosserie 3, favorisant ainsi le maintien de cette première partie 6 à proximité du bouclier 2 et améliorant l'aspect esthétique de l'agencement.

Notamment, les deuxièmes bras des doigts de maintien peuvent s'étendre quasiment jusqu'à la première partie 6 de l'élément de carrosserie, l'extrémité libre des deuxièmes bras 16 étant par exemple séparée de la première partie 6 de l'élément de carrosserie par un jeu. Dans l'exemple représenté, on notera que cette extrémité libre des deuxièmes bras 16 est arrondie afin de suivre l'arrondi de la jonction entre les première et deuxième parties de l'élément de carrosserie. Ceci permet d'éviter, ou tout au moins de limiter, le frottement entre cette extrémité libre et la première partie de l'élément de carrosserie. Ici, le deuxième bras 16 s'étend sensiblement perpendiculairement au premier bras 13. L'invention n'est toutefois pas limitée à une forme particulière d'un doigt de maintien 12, pourvu qu'il présente une surface d'appui 17 telle que définie plus haut. On notera enfin que le doigt de maintien 12 peut comporter une ou plusieurs nervures de rigidification 12a, 12b s'étendant le long des premier et deuxième bras 13, 16 sur une face de ceux-ci opposée à la face 7b de la deuxième partie 7 de l'élément de carrosserie (voir figure 5). De telles nervures 12a, 12b permettent de réduire les risques de rupture des doigts de maintien 12 lorsqu'ils subissent une force tendant à ouvrir l'angle formé entre le deuxième bras 16 et le premier bras 13.

Les orifices 14 et 15 respectivement du bouclier 2 et de l'élément de carrosserie ne servent qu'au passage du ou des doigts de maintien 12. Ils sont ainsi dimensionnés pour permettre leur passage. Ici, chaque orifice 14 est formé par une simple découpe sur un bord libre 5a du rebord 5 du bouclier.

Tel que visible sur les figures 2, 3, 5, dans le présent exemple, les dimensions de l'orifice 15 de la deuxième partie 7 de l'élément de carrosserie sont supérieures aux sections transversales maximales des premier et deuxième bras 13, 16 d'un doigt de maintien 12, et inférieures aux dimensions du deuxième bras 16 dans le plan de celui-ci. Ainsi, les doigts de maintien 12 peuvent être insérés dans les orifices 15 de la manière suivante : l'extrémité libre des bras 16 est d'abord introduite dans les orifices 15, ces deuxièmes bras 16 s'étendant sensiblement perpendiculairement à la deuxième partie 7 de l'élément de carrosserie. Ensuite, la pièce de fixation 9 est pivotée de manière à positionner les deuxièmes bras 16 sensiblement parallèlement à la deuxième partie 7 de l'élément de carrosserie 3, les premiers bras 13 passant alors au travers des orifices 15. Les surfaces d'appui 17 des doigts de maintien 12 sont en appui contre la face 7b de la deuxième partie 7 de l'élément de carrosserie lorsque que la pièce de fixation 9 est fixée à la troisième partie 8 de l'élément de carrosserie, par rivet, vissage, clippage ou autre.

Tel que visible sur les figures 3 et 6, la pièce de fixation 9 comprend en outre des doigts d'encliquetage 18 coopérant avec des orifices 19 du rebord 5 du bouclier 2. Dans l'exemple, trois doigts d'encliquetage 18 coopérant avec trois 3 orifices 19 du bouclier 2 sont prévus. Ces doigts d'encliquetage 18 sont répartis sur la longueur du rebord 11 de la pièce de fixation 9 pour un bon maintien du rebord 5 du bouclier. Dans cet exemple, on note que trois doigts de maintien 12 sont prévus en alternance avec les doigts d'encliquetage 18.

Ainsi, lorsque la pièce de fixation 9 est en position, fixée à la troisième partie 8 de l'élément de carrosserie 3, les doigts de maintien 12 traversant les orifices 15 de la deuxième partie 7 de l'élément de carrosserie, les doigts d'encliquetage 18 s'étendent alors sous la face 7a de la deuxième partie 7 de l'élément de carrosserie 3, à une distance prédéterminée de celle-ci, permettant l'insertion du rebord 5 du bouclier entre le rebord 11 de la partie de fixation 9 et la face 7a de la deuxième partie 7 de l'élément de carrosserie jusqu'à ce que les orifices 19 du rebord 5 du bouclier soient en prise avec les doigts d'encliquetage 18 de la pièce de fixation 9 (fig. 6), retenant ainsi le bouclier 2.

Ici, la pièce de fixation 9 présente sur sa partie de fixation 10 des orifices 20 pour le passage de rivets 21 la fixant à la troisième partie 8 de l'élément de carrosserie, et des doigts d'indexage 22 pour son positionnement par rapport à cette troisième partie 8 (figures 3 et 5).

Dans l'exemple décrit, les doigts de maintien 12 sont dirigés en direction de la première partie 6 de l'élément de carrosserie. On pourrait cependant envisager que ces doigts soient orientés parallèlement à la première partie 6 de l'élément de carrosserie. La partie de fixation 9 serait alors insérée dans les orifices 15 de la deuxième partie de l'élément de carrosserie sensiblement perpendiculairement à la deuxième partie 7 de l'élément de carrosserie, puis translatée parallèlement à cette deuxième partie 7 jusqu'à ce que la surface d'appui 17 des doigts de maintien soit contact avec la face 7b de la deuxième partie 7 de l'élément de carrosserie. Les orifices 15 doivent alors être suffisamment grands pour permettre le passage des deuxièmes bras 16 des doigts de maintien 12. Ce mode de réalisation est moins performant que le précédent mode de réalisation mais peut néanmoins être envisagé.

Dans la mesure où les dimensions des orifices 15 de la deuxième partie 7 de l'élément de carrosserie n'ont pas besoin d'être réalisés de manière précise (quelque soit le mode de réalisation), il est possible de les réaliser avec un outillage simple, avant mise en forme de l'élément de carrosserie, notamment à plat.

On notera en outre que la troisième partie de l'élément de carrosserie présente des zones embouties autour des orifices 23, 24 prévus respectivement pour la fixation de la partie de fixation 9 et son indexage, afin de rigidifier l'ensemble.

Tel que visible sur les figures, la troisième partie 8 de l'élément de carrosserie 3 s'étend sensiblement perpendiculairement à l'axe transversal Y du véhicule : un monteur peut donc facilement fixer la pièce de fixation 9 sur cette partie après insertion des doigts de maintien 12 dans les orifices 15. Ce positionnement favorable au monteur favorise l'obtention d'une bonne qualité de fixation.

L'invention n'est pas limitée par un nombre de doigts de maintien et de doigts d'encliquetage, pourvu que le nombre choisi permette de maintenir l'écartement entre l'élément de carrosserie et le bouclier sur la longueur en contact de ces deux pièces, et le maintien du bouclier.

## Revendications

1. Agencement (1) d'un bouclier (2) et d'un élément de carrosserie (3) d'un véhicule automobile, le bouclier (2) comportant une paroi (4) présentant une face externe visible (4a) et une face interne cachée (4b), la paroi (4) étant bordée par un rebord (5) incliné vers la face interne (4b), l'élément de carrosserie (3) présentant successivement une première partie (6) disposée dans le prolongement de la paroi (4) du bouclier à un jeu prédéterminé de celle-ci, une deuxième partie (7) s'étendant sensiblement parallèlement au rebord (5) du bouclier et une troisième partie (8) s'étendant en regard de la face interne (4b) de la paroi (4) du bouclier, le bouclier (2) et l'élément de carrosserie (3) étant fixés l'un à l'autre au moyen d'une pièce de fixation (9) laquelle comprend :
- une partie de fixation (10) dont une face (10a) est en appui contre la face interne (4b) de la paroi (4) du bouclier et dont une face opposée (10b) est solidarisée à la troisième partie (8) de l'élément de carrosserie, et
- un rebord longitudinal (11) s'étendant sensiblement perpendiculairement aux faces (10a, 10b) de la partie de fixation (10), le long d'un bord longitudinal de celles-ci, et solidarisé au rebord (5) du bouclier par encliquetage,
**caractérisé en ce que** le rebord longitudinal (11) de la pièce de fixation comprend un doigt de maintien (12), ou plusieurs doigts de maintien (12) de même orientation, chaque doigt de maintien (12) de forme générale en L présentant :
- un premier bras (13) solidaire de la pièce de fixation et traversant des orifices correspondants (14, 15) du rebord (5) du bouclier et de la deuxième partie (7) de l'élément de carrosserie, et
- un deuxième bras (16) s'étendant sensiblement parallèlement à la deuxième partie (7) de l'élément de carrosserie, ce deuxième bras (16) présentant une surface d'appui (17) en contact contre une face (7b) de la deuxième partie de l'élément de carrosserie opposée à une face (7b) en regard du rebord (5) du bouclier.

2. Agencement (1) selon la revendication 1, **caractérisé en ce que** le deuxième bras (16) dudit doigt de maintien (12) s'étend en direction de la première partie (6) de l'élément de fixation, sensiblement perpendiculairement à celle-ci.

3. Agencement (1) selon la revendication 2, **caractérisé en ce que** les dimensions de l'orifice (15) de la deuxième partie (7) de l'élément de carrosserie sont supérieures aux sections transversales maximales des premier et deuxième bras (13, 16) dudit doigt de maintien et inférieures aux dimensions du deuxième bras (16) dans un plan défini par celui-ci.

4. Agencement (1) selon l'une quelconque des revendications 1 à 3, **caractérisé en ce que** le rebord longitudinal (11) de la pièce de fixation comprend au moins deux doigts d'encliquetage (18) coopérant avec des orifices (19) correspondants du rebord (5) du bouclier.

5. Agencement (1) selon la revendication 4, **caractérisé en ce qu'**un doigt de maintien (12) est prévu entre deux doigts d'encliquetage (18) ou **en ce que** plusieurs doigts de maintien (12) sont disposés en alternance avec des doigts d'encliquetage (18) le long du bord longitudinal (11) de la pièce de fixation.

6. Agencement (1) selon l'une quelconque des revendications 1 à 5, **caractérisé en ce que** le rebord (5) du bouclier présente une ou plusieurs découpes sur un bord libre (5a) formant un ou plusieurs orifices (14) pour le passage du ou des doigts de maintien (12).

7. Agencement (1) selon l'une quelconque des revendications 1 à 6, **caractérisé en ce que** le bouclier (2) est en matériau polymère et l'élément de carrosserie (3) est en tôle.

8. Véhicule automobile comprenant au moins un agencement (1) selon l'une des revendications 1 à 7.

9. Véhicule automobile selon la revendication 8, dans lequel le bouclier (2) est un bouclier avant, optionnellement en matériau polymère, et l'élément de carrosserie (3) est une aile avant, optionnellement en tôle.

## Patentansprüche

1. Anordnung (1) aus einer Schürze (2) und einem Karosserieelement (3) eines Kraftfahrzeugs, wobei die Schürze (2) eine Wand (4) umfasst, die eine sichtbare Außenseite (4a) und eine verdeckte Innenseite (4b) aufweist, wobei die Wand (4) von einem zur Innenseite (4b) hin geneigten Flansch (5) umrandet wird, wobei das Karosserieelement (3) nacheinander einen ersten Teil (6), der in der Verlängerung der Wand (4) der Schürze mit einem vorbestimmten Spiel zu dieser angeordnet ist, einen zweiten Teil (7), der sich im Wesentlichen parallel zu dem Flansch (5) der Schürze erstreckt, und einen dritten Teil (8), der sich gegenüber der Innenseite (4b) der Wand (4) der Schürze erstreckt, aufweist, wobei die Schürze (2) und das Karosserieelement (3) mittels eines Befestigungsstücks (9) aneinander befestigt sind, welches umfasst:
- einen Befestigungsteil (10), dessen eine Seite (10a) an der Innenseite (4b) der Wand (4) der Schürze anliegt und dessen gegenüberliegende Seite (10b) mit dem dritten Teil (8) des Karosserieelements fest verbunden ist, und
- einen Längsflansch (11), der sich im Wesentlichen senkrecht zu den Seiten (10a, 10b) des Befestigungsteils (10) erstreckt, entlang eines Längsrandes derselben, und die mit dem Flansch (5) der Schürze durch Einrasten fest verbunden ist,
**dadurch gekennzeichnet, dass** der Längsflansch (11) des Befestigungsstücks einen Haltefinger (12) oder mehrere Haltefinger (12) mit derselben Ausrichtung umfasst, wobei jeder im Wesentlichen L-förmige Haltefinger (12) aufweist:
- einen ersten Arm (13), der mit dem Befestigungsstück fest verbunden ist und entsprechende Öffnungen (14, 15) des Flansches (5) der Schürze und des zweiten Teils (7) des Karosserieelements durchquert, und
- einen zweiten Arm (16), der sich im Wesentlichen parallel zum zweiten Teil (7) des Karosserieelements erstreckt, wobei dieser zweite Arm (16) eine Anlagefläche (17) aufweist, die sich in Kontakt mit einer Seite (7b) des zweiten Teils des Karosserieelements befindet, die einer Seite (7b) gegenüber dem Flansch (5) der Schürze gegenüberliegt.

2. Anordnung (1) nach Anspruch 1, **dadurch gekennzeichnet, dass** sich der zweite Arm (16) des Haltefingers (12) in Richtung des ersten Teils (6) des Befestigungselements, im Wesentlichen senkrecht zu diesem, erstreckt.

3. Anordnung (1) nach Anspruch 2, **dadurch gekennzeichnet, dass** die Abmessungen der Öffnung (15) des zweiten Teils (7) des Karosserieelements größer als die maximalen Querschnitte des ersten und zweiten Armes (13, 16) des Haltefingers und kleiner als die Abmessungen des zweiten Armes (16) in einer durch diesen definierten Ebene sind.

4. Anordnung (1) nach einem der Ansprüche 1 bis 3, **dadurch gekennzeichnet, dass** der Längsflansch (11) des Befestigungsstücks wenigstens zwei Rastfinger (18) umfasst, die mit entsprechenden Öffnungen (19) des Flansches (5) der Schürze zusammenwirken.

5. Anordnung (1) nach Anspruch 4, **dadurch gekennzeichnet, dass** ein Haltefinger (12) zwischen zwei Rastfingern (18) vorgesehen ist, oder dadurch, dass mehrere Haltefinger (12) abwechselnd mit Rastfingern (18) entlang des Längsrandes (11) des Befestigungsstücks angeordnet sind.

6. Anordnung (1) nach einem der Ansprüche 1 bis 5, **dadurch gekennzeichnet, dass** der Flansch (5) der Schürze einen oder mehrere Ausschnitte an einem freien Rand (5a) aufweist, die eine oder mehrere Öffnungen (14) zum Durchstecken des oder der Haltefinger (12) bilden.

7. Anordnung (1) nach einem der Ansprüche 1 bis 6, **dadurch gekennzeichnet, dass** die Schürze (2) aus Polymermaterial besteht und das Karosserieelement (3) aus Blech besteht.

8. Kraftfahrzeug, welches wenigstens eine Anordnung (1) nach einem der Ansprüche 1 bis 7 umfasst.

9. Kraftfahrzeug nach Anspruch 8, wobei die Schürze (2) eine Frontschürze ist, optional aus Polymermaterial, und das Karosserieelement (3) ein vorderer Kotflügel ist, optional aus Blech.

## Claims

1. Arrangement (1) of a bumper (2) and of a body element (3) of a motor vehicle, the bumper (2) comprising a wall (4) having a visible outer face (4a) and a concealed inner face (4b), the wall (4) being edged by a flange (5) inclined toward the inner face (4b), the body element (3) having, in succession, a first part (6) disposed in the extension of the wall (4) of the bumper with a predetermined play thereof, a second part (7) extending substantially parallel to the flange (5) of the bumper and a third part (8) extending facing the inner face (4b) of the wall (4) of the bumper, the bumper (2) and the body element (3) being fixed to one another by means of a fixing piece (9) which comprises:
- a fixing part (10) of which one face (10a) is bearing against the inner face (4b) of the wall (4) of the bumper and of which an opposite face (10b) is secured to the third part (8) of the body element, and
- a longitudinal flange (11) extending substantially at right angles to the faces (10a, 10b) of the fixing part (10), along a longitudinal edge thereof, and secured to the flange (5) of the bumper by snap-fitting,
**characterized in that** the longitudinal flange (11) of the fixing piece comprises a securing finger (12), or several securing fingers (12) of the same orientation, each generally L-shaped securing finger (12) having:
- a first arm (13) secured to the fixing piece and passing through corresponding orifices (14, 15) of the flange (5) of the bumper and of the second part (7) of the body element, and
- a second arm (16) extending substantially parallel to the second part (7) of the body element, this second arm (16) having a bearing surface (17) in contact against a face (7b) of the second part of the body element opposite a face (7b) facing the flange (5) of the bumper.

2. Arrangement (1) according to Claim 1, **characterized in that** the second arm (16) of said securing finger (12) extends toward the first part (6) of the fixing element, substantially at right angles thereto.

3. Arrangement (1) according to Claim 2, **characterized in that** the dimensions of the orifice (15) of the second part (7) of the body element are greater than the maximum cross sections of the first and second arms (13, 16) of said securing finger and less than the dimensions of the second arm (16) in a plane defined thereby.

4. Arrangement (1) according to any one of Claims 1 to 3, **characterized in that** the longitudinal flange (11) of the fixing piece comprises at least two snap-fitting fingers (18) cooperating with corresponding orifices (19) of the flange (5) of the bumper.

5. Arrangement (1) according to Claim 4, **characterized in that** a securing finger (12) is provided between two snap-fitting fingers (18) or **in that** several securing fingers (12) are disposed alternately with snap-fitting fingers (18) along the longitudinal edge (11) of the fixing piece.

6. Arrangement (1) according to any one of Claims 1 to 5, **characterized in that** the flange (5) of the bumper has one or more cutouts on a free edge (5a) forming one or more orifices (14) for the passage of the securing finger or fingers (12).

7. Arrangement (1) according to any one of Claims 1 to 6, **characterized in that** the bumper (2) is made of polymer material and the body element (3) is made of sheet metal.

8. Motor vehicle comprising at least one arrangement (1) according to one of Claims 1 to 7.

9. Motor vehicle according to Claim 8, in which the bumper (2) is a front bumper, optionally made of polymer material, and the body element (3) is a front wing, optionally made of sheet metal.
